# EUROPEAN PATENT SPECIFICATION

(11) **EP 2 586 564 B1**
(45) Date of publication and mention of the grant of the patent: **24.12.2014**
(21) Application number: 12190228.2
(22) Date of filing: 26.10.2012
(51) Int. Cl.: B23Q 17/00, B23Q 1/03, G06F 3/16, G10L 13/04

(54) **Wood machining method and apparatus**
Holzbearbeitungsverfahren und -Maschine
Méthode et machine d'usinage du bois

(30) Priority: 28.10.2011 IT MO20110274
(43) Date of publication of application: 01.05.2013
(73) Proprietor: SCM Group S.p.A., 47900 Rimini (IT)
(72) Inventor: Ratti, Federico, 47922 Viserba di Rimini (IT)
(74) Representative: Villanova, Massimo

(56) References cited:
- EP-A1- 2 371 488
- EP-A2- 0 083 725
- WO-A1-00/23982
- US-A- 5 758 869

## Description

### Background of the invention

The invention relates to a method and an apparatus for machining wood or a similar-to-wood material.

Specifically, but not exclusively, the invention can be advantageously applied in a numerically controlled machining centre for machining panels made of wood or a similar-to-wood material.

One of the problems of numerically controlled machining centres for machining wood is setting up the machining centre before the operating unit performs the various programmed machinings on a workpiece made of wood. In this preparatory step may be necessary to modify the configuration of the supporting plane supporting the workpiece according to the shape and dimensions of the workpiece and/or of the operations that have to be performed on the workpiece.

In particular, machining centres are known in which a supporting plane of a panel made of wood comprises locking means for retaining the workpiece of the supporting plane firmly and stably during machining. Such locking means can comprise, for example, sucking means that is able to generate a vacuum to retain the workpiece in a machining position on the supporting plane. The supporting plane can comprise a plurality of crosspieces, extending along the horizontal axis Y, slidably supported on longitudinal beams extending along the main horizontal axis X. Each crossbeam is provided with one, two or more suction units, each having an upper surface that defines the supporting plane of the panel. The suction locking system comprises conduits associated with the crosspieces and leading onto the suction units to fix the panel by the air vacuum.

In the setting up step, depending on the dimensions of the panel to be machined and/or on the machinings to be performed thereupon, the crosspieces are set at a mutual distance along the main axis X, whilst each suction unit is slidably positioned on the corresponding crosspiece along the axis Y normal to the axis X.

The position of the crosspieces in the axis X and of the suction units in the axis Y can be adjusted manually by an operator who has to know the desired values of the coordinates of the elements to be positioned in the axes X an Y and thus, on the basis of these values, position the elements correctly.

This involves the operator in a significant effort to memorise the values, associate the values with the respective elements and finally adjust the position of the latter. As a result, the machining centre takes a long time to set up and there are not insignificant risks of positioning errors.

US-5,758,869 discloses a method and an apparatus for supporting a workpiece, with crosspieces positionable in longitudinal direction, carrying fixing members positionable in the transverse direction. The positioning is performed manually. A control unit has positioning data stored in a memory and in accordance to that data lights across the crosspieces and across a longitudinal piece are switched on or off, showing to an operator where the crosspieces and the fixing members should be positioned.

### Summary of the invention

One object of the invention is to remedy one or more of the aforesaid drawbacks.

One advantage is to provide a method for facilitating the setting up of the supporting plane of a workpiece made of wood or a similar-to-wood material in a numerically controlled machining centre.

One advantage is to reduce the risks of errors in the manual positioning of the movable elements that give rise to a supporting plane of the workpiece in a numerically controlled machining centre for workpieces made of wood or similar-to-wood materials.

One advantage is to make available a method for facilitating the installation of an apparatus for machining a workpiece made of wood or a similar-to-wood material, in which an operator is guided step by step to preparing the desired configuration of the supporting plane supporting the workpiece.

One advantage is to enable the supporting plane supporting the workpiece to be set up correctly even by an operator who is not an expert.

One object of the present invention is to devise a constructionally simple and cheap apparatus, which is able to implement the above method.

Such objects and advantages, and still others, are achieved by the method and the apparatus according to one or more of the claims set out below.

In one embodiment, a numerically controlled machining centre for machining a workpiece made of wood or a similar-to-wood material is started by supplying a first voice instruction via a voice user interface to assist an operator to perform first desired positioning of a first element of a supporting plane supporting the workpiece, by detecting that the operator has completed said first desired positioning and providing, in response to said detection, a second voice instruction to assist the operator to perform a second desired positioning of a second element of the supporting plane.

### Brief description of the drawings

The invention can be better understood and implemented with reference to the attached drawings that illustrate an embodiment thereof by way of non-limiting example.
Figure 1 is a schematic top plan view of a machining centre for panels.
Figure 2 is a side view of figure 1.
Figures 3 to 8 illustrate successive steps of guided setting up of a machining centre for panels.

### Detailed description

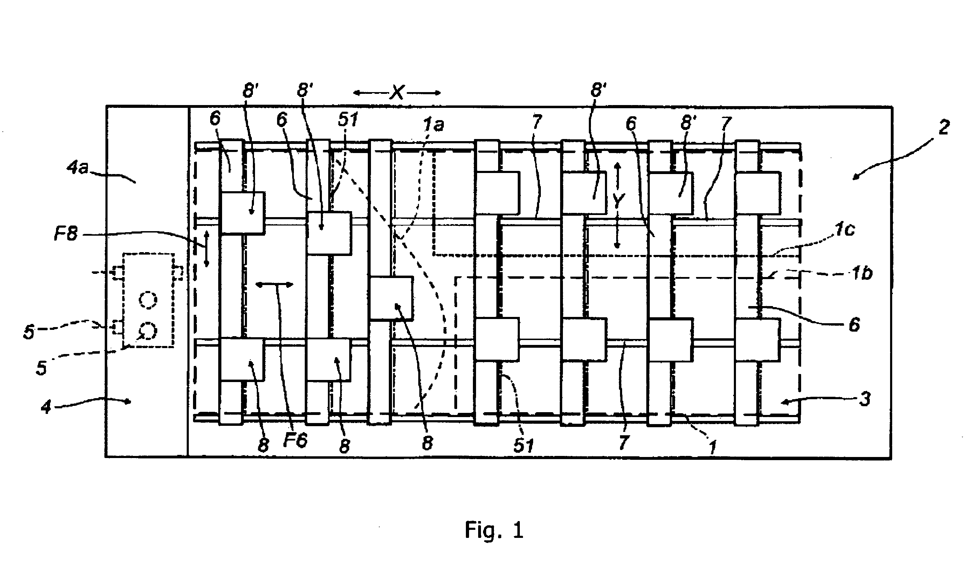

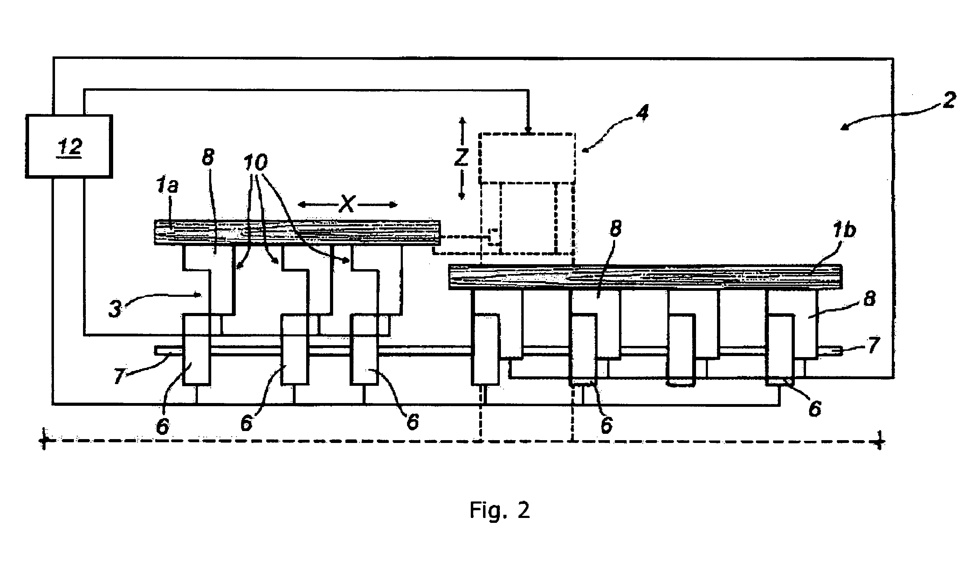

With reference to the aforesaid figures 1 and 2, with 1 a workpiece (unmachined panel) has been indicated and with 2 overall an apparatus has been indicated for machining workpieces made, in particular, of wood or of similar-to-wood materials. In the specific case the apparatus comprises a numerically controlled machining centre for panels made of wood or similar-to-wood materials. The apparatus 2 may be used for different machinings on the workpiece 1, for example for obtaining the machined workpieces 1a, 1b and 1c (panels), in particular for chip-removing machinings (for example millings, vertical and horizontal drilling, cuts, etc).

The apparatus 2 (machining centre) comprises a supporting plane (horizontal resting plane 3) for at least one workpiece 1 (unmachined panel) and at least one operating unit 4, in which the supporting plane (resting plane 3) and the operating unit 4 are able to perform movements in relation to one another.

The operating unit 4 may be supported, as in the specific example, by a portal structure 4a. The structure 4a may be movable along the three main axes X, Y, Z. The operating unit 4 will be provided with machining tools machining the unmachined panel 1 to obtain at least one machined workpiece 1a, 1b or 1c. Each unit 4 will be arranged, in particular, above the supporting plane 3.

An electronic control unit 12 is configured for governing the machining apparatus 2, in particular for controlling at least the operating unit 4. In particular, the electronic control unit 12 may be programmed to control the supporting plane 3 and the operating units 4 in such a manner as to coordinate the corresponding movements thereof in order to perform the programmed operations. In general, the plane 3 and the units 4 may be reciprocally movable along at least three main movement axes (X, Y, Z) through control by the control unit.

The supporting plane 3 comprises a plurality of crosspieces 6 (in the shape of bars) supported by a base formed, for example, by longitudinal beams 7. Each crosspiece 6 has at least one fixing member for locking the workpiece in a work position on the supporting plane. Each fixing member may comprise, as in the specific case, a suction unit 8 having an upper surface 8a that defines the supporting plane 3 for the workpiece 1. Each suction unit 8 will be connected to sucking means (known and not illustrated) configured for generating a vacuum. This vacuum will operate on each suction unit 8 to lock the workpiece 1 stably. The locking means of the workpiece may comprise (in addition or alternatively to the suction locking means constituted by the suction units 8) mechanical clamping means or the jaw or vice type or of yet another type.

Each crosspiece 6 may be slidably supported on the longitudinal beams 7 (parallel to one another) in such a manner as to enable the crosspieces 6 to be positioned stably and in relation to one another along the longitudinal axis X of the machining centre 2 (see arrows F6). After adjustment, the crosspieces 6 may be locked permanently in position. The position of each crosspiece 6 along the axis X may be adjusted by manual sliding (by an operator) on the beams 7, or automatically by an automatic movement system (that is of known type and is not shown) that is connected to the control unit 12 to move the crosspieces 6 along the axis X independently of one another.

Similarly, each suction unit 8 may be slidably adjustable along the corresponding crosspiece 6, i.e. along the transverse axis Y arranged transversely (perpendicularly) to the first axis X (see arrows F8). Each suction unit 8, 8' will be, in particular, slidably coupled with the corresponding crosspiece 6 on sliding guides and may be moved, for example, by a kinematic chain system 51. The position of each suction unit along the axis Y may be adjusted by manual sliding (performed by an operator) on the respective crosspiece 6, or automatically by an automatic movement system (for example by linking the kinematic system 51 to the control unit 12) connected to the control unit 12 to move the suction units along the axis Y independently from one another.

It is possible to provide, as in this specific example, for each suction unit 8, 8' being provided with movement means 10 along a third vertical axis Z, to move the height of the corresponding upper surface 8a defining the supporting plane of the panel 1, thus determining raising or lowering of the panel 1. The vertical movement means 10 may be, for example, the one disclosed in patent publication EP 1872919, which is included here for reference.

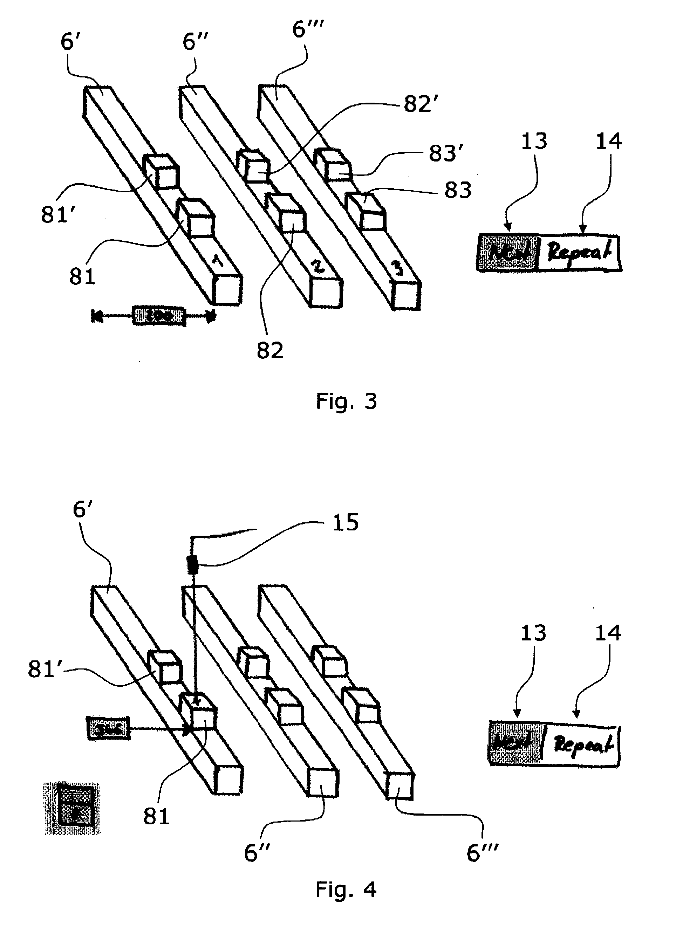

Below, with reference to figures 3 to 8, a guided procedure for positioning the suction units 8, 8' on the supporting plane and thus for positioning and locking the unmachined panel 1 on the suction units 8, 8' (by a vacuum) is disclosed. This procedure implements a method for facilitating starting of the apparatus 2.

The programmable control unit 12 is connected to a voice user interface of the apparatus 2 and/or to a graphic user interface of the apparatus 2.

The control unit is programmed for showing on a screen of the graphic user interface a video page prompting the operator to choose between two or more methods of setting or preparing the supporting plane (i.e. positioning the fixing members fixing the workpiece on the supporting plane). In particular, the operator has to choose between an automatic setting mode and a manual setting mode. The procedure disclosed below refers to the manual setting mode. It is thus supposed that in the specific case disclosed here the operator chooses manual mode.

Before or after the operator chooses the mode of positioning of the fixing members, an electronic computer memory connected to the control unit 12 receives data relating to positioning the fixing members on the supporting plane. Such data will at least comprise, for each fixing member (suction units 8, 8'), the coordinates of the fixing member along the (horizontal) axes X and Y parallel to the (horizontal) supporting plane itself. In particular amongst the positioning data stored in the computer memory there will be the X-data, one for each crosspiece 6, associated with the desired positioning of the various crosspieces along the longitudinal direction (axis X), i.e. the X coordinates of the desired positions of the crosspieces considering a predefined zero point at an end angle of the supporting plane. Amongst the positioning data that are storable in the computer memory there will also be Y-data, one for each fixing member (suction unit 8, 8'), associated with the desired positioning of the fixing members along the transverse direction (axis Y), i.e. the Y coordinates of the desired positions of the various fixing members on the respective crosspieces always considering the set zero point of the supporting plane as a reference point.

The X-data entry procedure and the Y-data entry procedure in the computer memory may comprise any data entering procedure. Once the Y-data have been entered the control unit will update the apparatus settings accordingly. At this point, with each crosspiece a corresponding coordinate in the axis X will be associated and with each fixing member a corresponding coordinate in the axis Y will be associated.

After the operator has chosen the manual mode for setting the supporting plane, the control unit 12 will supply the operator with a first voice instruction providing help in executing the first desired positioning of a crosspiece or of a fixing member. In the specific case, the first positioning to be executed relates to the first crosspiece (in particular the crosspiece nearest the zero point of the supporting plane). The first voice instruction will be emitted, in particular, by a speaker of the voice user interface. The first voice instruction may comprise, for example, the indication of which element of the supporting plane has to be positioned (for example, the speaker will say "first crosspiece" or the like) and the indication of the numeric value of the relative coordinate X (for example the speaker will say "two hundred").

In figure 3 the first crosspiece 6' is illustrated that is positioned along the axis X in the position corresponding to the value of coordinate X equal to 200 mm. After supplying the voice indications relating to (1) which element (first crosspiece 6') is to be positioned and (2) the numeric value of the corresponding positioning, at least one of the (graphic and/or voice) user interfaces will provide the operator with a prompt relating to the next operation to be performed. This prompt may comprise, in particular, a choice between continuing by going on to the next procedure step or repeating the voice indications relating to the current procedure step. In the specific case the graphic user interface will shown on the display an icon 13 (for example "Next" or "Avanti" or the like) to prompt the operator to proceed to the next procedure step and an icon 14 (for example "Repeat" or "Ripeti" or the like) to prompt the operator to repeat the voice instructions just given relating to the current procedure step. In addition, or alternatively, the voice user interface may provide voice instructions to prompt the operator to choose between the aforesaid options by saying "Next" or "Repeat" or the like).

After at least one or both user interfaces have prompted the operator with the two possible options ("Next" or "Repeat" or the like), the operator will have the possibility of selecting the options through one or both user interfaces. In particular, the operator may emit a voice command ("Next" or "Repeat" or the like) corresponding to the desired option. In particular, the operator can, for example, touch one of the icons ("Next" or "Repeat" or the like) of the touchscreen of the graphic user interface.

After the operator has chosen to proceed with the next procedure step ("Next" command), the control unit 12 will supply the operator with a second voice instruction providing help in executing the second desired positioning that in the specific case may be, for example, positioning a fixing member on the first crosspiece. In particular the second positioning to be executed can relate to the first fixing member 81 of the first crosspiece 6' (for example the fixing member nearer the zero point of the supporting plane). The second voice instruction will be emitted by a speaker of the voice user interface. The second voice instruction may comprise, for example, the indication of which element has to be positioned (for example the speaker will say "first suction cup" or the like) and the indication of the numeric value of the corresponding coordinate Y (for example the speaker will say "three hundred and forty-six").

In figure 4 the first fixing member 81 is illustrated of the first crosspiece 6' positioned along the axis Y in the position corresponding to the value of the coordinate Y equal to 346 mm. In this step, the control unit 12 may be programmed to activate the indicating means to indicate the element to be positioned (i.e. in this case, the first fixing member 81).

Such indicating means may comprise, as in the illustrated example, a laser pointer with which the machining centre is provided, and/or a light source (not illustrated, for example a LED) associated with the element to be positioned (for example arranged thereupon), in which case a respective light source that is activatable by the control unit in function of the supporting plane set-up programme may be associated with each fixing member 81, 81', 82, 82', 83, 83' and/or with each crosspiece 6', 6", 6"' (for example by being integrally mounted therewith).

Thus, together with the second voice instruction, the operator will also be assisted by a visual indication of the element to be positioned, i.e., in the specific example disclosed, by a laser beam emitted by the pointer 15 and directed to hit this element to be positioned.

Further (optional) help could be provided by a graphic representation of the supporting plane, shown on the display of the graphic user interface, in which the element to be positioned (for example the first fixing member 81 of the first crosspiece 6') is highlighted in a visually perceptible manner (for example by flashing or different colouring of the icon representing the element to be positioned).

After supplying the second voice instruction, the graphic user interface and/or the voice user interface will provide the operator with a prompt relating to the next operation to be performed. This prompt may be, for example, analogous to the prompt supplied after the first voice instruction (in particular, a prompt to be chosen between the options "Next" or "Repeat").

After the operator has chosen to proceed with the next procedure step ("Next" command), the control unit will provide the operator with a third voice instruction providing help with the execution of the third desired positioning, which in the specific case may be, for example, positioning a further fixing member 81' on the first crosspiece 6'. The third voice instruction will comprise the indication of the element to be positioned (for example the speaker will say "second suction cup" or the like) and the indication of the numeric value of the corresponding coordinate Y (for example the speaker will say "five hundred").

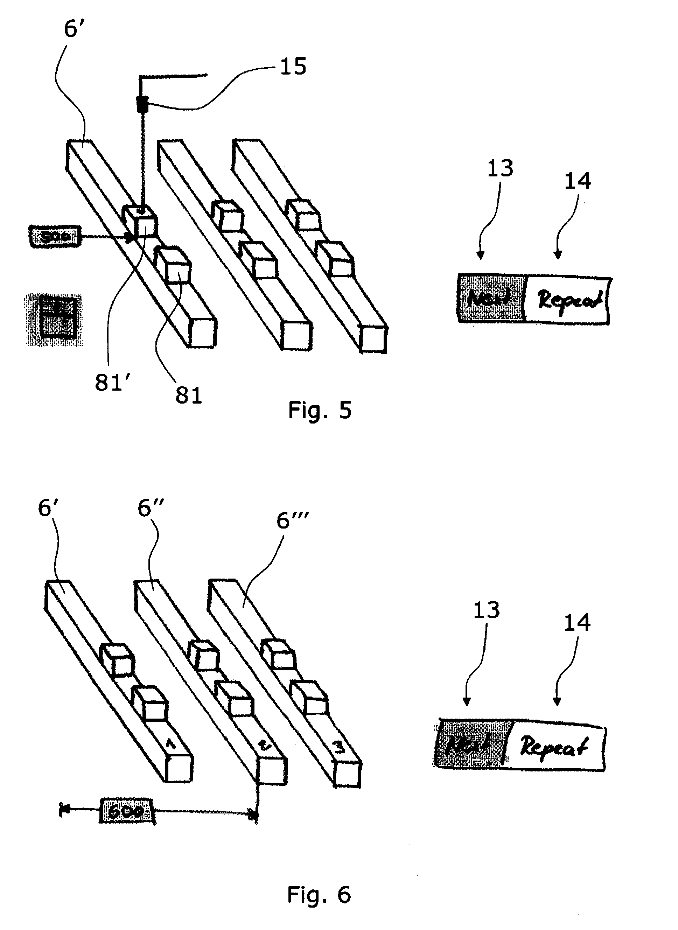

In figure 5 the second fixing member 81' is illustrated of the first crosspiece 6' positioned along the axis Y in the position corresponding to the coordinate value Y equal to 500 mm. The indicating means (laser pointer 15 or other means) will be activated to indicate the element to be positioned. In the specific case the laser pointer 15 is movable on a horizontal plane X-Y. On the display of the graphic user interface the icon of the element to be positioned may also be highlighted.

In the next procedure step, for example, the second crosspiece 6" may be positioned. In figure 6 the second crosspiece 6" is illustrated positioned along the axis X in the desired position corresponding to the value of coordinate X equal to 600 mm. It is observed that in general the indicating means (laser pointer or other) could also be activated to indicate the element to be positioned when this element is a crosspiece. Further, the icon of the element to be positioned could be highlighted on the display of the graphic user interface (for example by flashing or other means) even when the element to be positioned is a crosspiece.

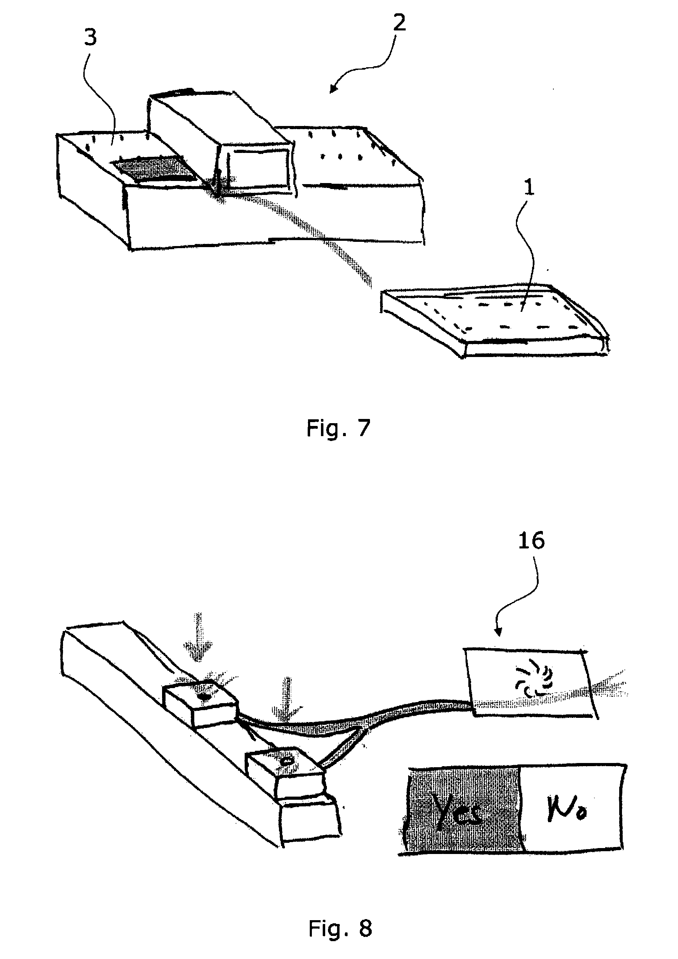

After the last element of the supporting plane has been positioned, the plane is ready to receive the workpiece 1 (figure 7). In this workpiece positioning step, the voice user interface can supply a voice signal to the operator warning that the supporting plane is ready to receive the workpiece and/or that the workpiece can be positioned on the plane.

After the workpiece 1 has been positioned on the supporting plane, at least one or both the user interfaces (graphic and voice) provide the operator with a prompt to activate the sucking means (vacuum pump) set up to generate the vacuum of the suction units. In particular, the voice user interface can emit a voice signal to ask the operator whether the sucking means should be activated or not (for example the speaker will say "Activate vacuum pump, yes or no?"). The voice user interface may thus also prompt the operator to use the voice command (for example "Yes") that is suitable for activating the sucking means. The graphic user interface may also show a video page (for example figure 8) that is able to represent the sucking means graphically (for example an icon 16 representing sucking means by a graphic or alphanumeric symbol) and/or suction units ready for being activated, together with a prompt to the operator to emit the voice command ("Yes") that is suitable for activating the sucking means.

Once the sucking means have been activated workpiece is locked in the machining position on the supporting plane and it is thus possible to perform the different programmed machinings on the workpiece.

Figures 3 to 8 could correspond to as many video pages shown by the control unit on the display of the graphic user interface during the various steps of the supporting plane set-up procedure.

It is observed that in the setting-up method disclosed above the control unit 12 detects, in particular for each positioning of an element (crosspiece or fixing member) of the supporting plane, when the operator has completed positioning. This detection may occur by reception of the voice command sent by the operator, through the voice user interface, so that the control unit will have been programmed to supply the subsequent positioning instruction in response to receipt of the aforesaid voice command. This detection could comprise the receipt of a signal from at least one operation conducted manually by an operator on the crosspiece or fixing member that has just been positioned. In particular, at least one sensor (which has not been illustrated) could be provided, for example a sensor operationally associated with each crosspiece and with each fixing member, which automatically emits a signal when the operator locks the corresponding crosspiece or fixing member is position manually. In particular, each element (crosspiece or fixing member) of the supporting plane can comprise locking means in position that prevents further sliding of the element. These locking means may comprise, for example, an actuator that is drivable manually by the operator (for example by a switch arranged on the element to be locked). Driving the actuator may cause the sensor to be activated automatically and thus moving on to the next step.

After any desire positioning has been completed (apart the last one), the control unit 12 will supply a voice instruction to assist the operator to perform the next desired positioning (of a crosspiece in the longitudinal direction X or of a fixing member in the transverse direction Y). Each voice instruction will be associated with a datum or set of data (relating to the element to be positioned and to the corresponding coordinate), which will be spoken by the speaker (for example the speaker will comprise a device that is applicable to the ear, such as a earpiece or a pair of ear pieces or a loudspeaker headphones). This datum or set of data may comprise at least one position coordinate in the axis X (X-data) or a position coordinate in the axis Y (Y-data).

The method disclosed here thus comprises at least the steps of: providing, via a voice user interface, a first voice instruction to help an operator perform a first desired positioning of a first element of the supporting plane; and, only after it has been detected that the operator has completed the first desired positioning, providing, by means of the voice user interface, a second voice instruction to help the operator perform a second desired positioning of a second element of the supporting plane.

The method disclosed above may be implemented by making use of a computer programme comprising the corresponding implementation instructions. Further, these instructions of the computer programme may be written on any medium that is readable by a computer. The programme instructions may be run by a processor to implement the same method.

In the examples disclosed above the fixing member of the workpiece is positionable in a longitudinal direction X and in a transverse direction Y by means of linear movements. It is nevertheless possible to provide for each fixing member, or at least a fixing member, being positionable by rotation (around a vertical rotation axis or axis that is normal to the supporting plane supporting the workpiece). This possibility of positioning by rotation may be achieved in addition to the linear positions in the directions X and Y, or alternatively to one or both linear positionings in the directions X and Y. What has been set previously with reference to the linear positioning of a fixing member in the direction X and/or in the direction Y may also be said with reference to positioning via rotation, whilst remaining within the scope of the present invention.

## Claims

1. Method for facilitating the starting of an apparatus (2) for machining a workpiece (1) made of wood or a similar-to-wood material, said apparatus having a supporting plane (3) for supporting the workpiece, said supporting plane extending in a longitudinal direction (X), said supporting plane (3) having one or more crosspieces (6), each crosspiece extending in a transverse direction (Y) that is transverse to said longitudinal direction (X), each crosspiece (6) being positionable in said supporting plane along said longitudinal direction (X), each crosspiece (6) having one or more fixing members (8, 8') for fixing the workpiece, each fixing member being positionable in said crosspiece (6) along said transverse direction (Y), said apparatus having a programmable control unit (12) connected to a voice user interface; said method comprising the steps of:
- receiving, in a memory connected to said control unit (12), data comprising one or more X-data associated with the desired positioning of said one or more crosspieces (6) along said longitudinal direction (X) and one or more Y-data associated with the desired positioning of said one or more fixing members (8, 8') along said transverse direction (Y);
- updating the settings of said apparatus on the basis of said one or more X-data and one or more Y-data;
- supplying a first voice instruction to assist an operator to perform a first desired positioning of one of said one or more crosspieces (6) along said longitudinal direction (X) or of one of said one or more fixing members (8, 8') along said transverse direction (Y), said first voice instruction being associated with a first datum of said one or more X-data and one or more Y-data, said step of supplying a first voice instruction comprising at least one operation performed by said voice user interface;
- detecting that the operator has completed said first desired positioning;
- after said first desired positioning has been completed, supplying a second voice instruction to assist the operator to perform a second desired positioning of one of said one or more crosspieces (6) along said longitudinal direction (X) or of one of said one or more fixing members (8, 8') along said transverse direction (Y), said second voice instruction being associated with a second datum of said one or more X-data and one or more Y-data, said step of supplying a second voice instruction comprising at least one operation performed by said voice user interface.

2. Method according to claim 1, wherein said detecting step comprises receiving a set voice command sent by the operator through said voice user interface, said control unit (12) being programmed to supply said second instruction in response to the receipt of said voice command.

3. Method according to claim 1 or 2, wherein said detecting step comprises receiving a signal activated by at least one operation performed manually by an operator on the crosspiece (6) or fixing member (8, 8') positioned on the basis of said first instruction.

4. Method according to claim 3, wherein said operation performed manually comprises locking in position said crosspiece (6) or said fixing member (8, 8'), said signal being sent to said control unit (12) in response to said locking in position by a sensor operationally associated with said crosspiece or with said fixing member.

5. Method according to any preceding claim, wherein said step of supplying a first voice instruction and/or said step of supplying a second voice instruction is associated with a step of activating indicating means (15) that is suitable for indicating to the operator the element to be positioned.

6. Method according to claim 5, wherein said indicating means comprises a light source (15) operating on the element to be positioned.

7. Method according to claim 6, wherein said light source hits the element to be positioned with a light beam and/or wherein said light source is arranged on the element to be positioned.

8. Method according to any preceding claim, wherein said first voice instruction or said second voice instruction comprises at least one coordinate numeric value for positioning a crosspiece (6) or a fixing member (8, 8').

9. Method according to any preceding claim, wherein said one or more fixing members (8, 8') for fixing the workpiece are of the suction type and wherein said voice user interface prompts the user to activate the suction means of said one or more fixing members after all the desired positionings have been completed.

10. Apparatus, in particular for implementing the method of any preceding claim, comprising:
- a supporting plane (3) of a workpiece (1) made of wood or a similar-to-wood material, said supporting plane (3) extending in a longitudinal direction (X), said supporting plane having one or more crosspieces (6), each crosspiece extending in a transverse direction (Y) that is transverse to said longitudinal direction (X), each crosspiece (6) being positionable in said supporting plane (3) along said longitudinal direction (X), each crosspiece having one or more fixing members (8, 8') fixing the workpiece, each fixing member being positionable in said crosspiece along said transverse direction (Y);
- at least one operating unit (4) operating above said supporting plane and provided with one or more tools for performing machinings on the workpiece;
- a voice user interface;
- a programmable control unit (12) connected to said voice user interface;
- a medium that is readable by a computer and has programme instructions that are executable by said control unit (12), wherein said programme instructions comprise the steps of:
receiving, in a memory connected to said control unit, data comprising one or more X-data associated with the desired positioning of said one or more crosspieces along said longitudinal direction (X) and one or more Y-data associated with the desired positioning of said one or more fixing members along said transverse direction (Y);
updating the settings of said apparatus on the basis of said one or more X-data and one or more Y-data;
supplying a first voice instruction to assist an operator to perform a first desired positioning of one of said one or more crosspieces along said longitudinal direction (X) or of one of said one or more fixing members along said transverse direction (Y), said first instruction being associated with a first datum of said one or more X-data and one or more Y-data, said step of supplying a first instruction comprising at least one operation performed by said voice user interface;
detecting that the operator has completed said first desired positioning;
after said first desired positioning has been completed, supplying a second voice instruction to assist the operator to perform a second desired positioning of one of said one or more crosspieces along said longitudinal direction (X) or of one of said one or more fixing members along said transverse direction (Y), said second instruction being associated with a second datum of said one or more X-data and one or more Y-data.

11. Medium that is readable by computer and has programme instructions that are executable by a processor for implementing a method for facilitating the starting of an apparatus for machining a workpiece made of wood or a similar-to-wood material, said programme instructions comprising the steps of the method according to any one of claims 1 to 9.

12. Computer programme comprising instructions for implementing a method for facilitating the starting of an apparatus for machining a workpiece made of wood or a similar-to-wood material, said programme instructions comprising the steps of the method according to any one of claims 1 to 9.

## Patentansprüche

1. Verfahren zum Erleichtern des Startens einer Vorrichtung (2) zum Bearbeiten eines Werkstücks (1), das aus Holz oder einem holzähnlichen Material hergestellt ist, wobei die Vorrichtung eine Lagerungsebene (3) zum Lagern des Werkstückes aufweist, wobei die Lagerungsebene sich in einer Längsrichtung (X) erstreckt, wobei die Lagerungsebene (3) ein oder mehr Querstücke (6) aufweist, wobei sich jedes Querstück in einer quer verlaufenden Richtung (Y) erstreckt, die quer zu der Längsrichtung (X) verläuft, wobei jedes Querstück (6) in der Lagerungsebene entlang der Längsrichtung (X) positionierbar ist, wobei jedes Querstück (6) ein oder mehrere Fixierelemente (8, 8') zum Fixieren des Werkstücks umfasst, wobei jedes Fixierelement an dem Querstück (6) entlang der querverlaufenden Richtung (Y) positionierbar ist, wobei die Vorrichtung eine programmierbare Steuereinheit (12) umfasst, die mit einer Sprach-Nutzerschnittstelle verbunden ist; wobei das Verfahren die Schritte umfasst:
- Empfangen von Daten in einem mit der Steuereinheit (12) verbundenen Speicher umfassend ein oder mehrere X-Daten, die mit der gewünschten Positionierung des einen oder der mehreren Querstücke (6) entlang der Längsrichtung (X) assoziiert sind, und ein oder mehrere Y-Daten, die mit der gewünschten Positionierung von dem einen oder der mehreren Fixierelementen (8, 8') entlang der querverlaufenden Richtung (Y) assoziiert sind;
- Aktualisieren der Einstellungen der Vorrichtung auf Basis von dem einen oder den mehreren X-Daten oder dem einen oder mehreren Y-Daten;
- Zuführen einer ersten Sprachanweisung, um einem Bediener dabei zu helfen, eine erste gewünschte Positionierung von einem von dem einen oder mehreren Querstücke (6) entlang der Längsrichtung (X) oder von einem von dem einen oder mehreren Fixierelementen (8, 8') entlang der querverlaufenden Richtung (Y) durchzuführen, wobei die erste Sprachanweisung mit einem ersten Bezugswert von dem einen oder den mehreren X-Daten und von dem einen oder mehreren Y-Daten assoziiert ist, wobei der Schritt eines Zuführens einer ersten Sprachanweisung wenigstens einen Vorgang umfasst, die von der Sprach-Nutzerschnittstelle durchgeführt wird;
- Erfassen, dass der Bediener die erste gewünschte Positionierung vervollständigt hat;
- Zuführen einer zweiten Sprachanweisung nachdem die erste gewünschte Positionierung vervollständigt ist, um dem Bediener dabei zu helfen, eine zweite gewünschte Positionierung von einem der einen oder mehreren Querstücken (6) entlang der Längsrichtung (X) oder von dem einen oder mehreren Fixierelementen (8, 8') entlang der querverlaufenden Richtung (Y) durchzuführen, wobei die zweite Sprachanweisung mit einem zweiten Bezugswert von den einen oder mehreren X-Daten oder von einem der einen oder mehreren Y-Daten assoziiert ist, wobei der Schritt eines Zuführens einer zweiten Sprachanweisung wenigstens einen Vorgang umfasst, der über die Sprach-Nutzerschnittstelle durchgeführt wird,.

2. Verfahren gemäß Anspruch 1, bei dem der Erfassungsschritt ein Empfangen eines eingestellten Sprachkommandos umfasst, das über den Bediener über die Sprach-Nutzerschnittstelle gesendet wurde, wobei die Steuereinheit (12) derart programmiert ist, um die zweite Anweisung in Reaktion auf den Empfang des Sprachkommandos zuzuführen.

3. Verfahren gemäß Anspruch 1 oder 2, bei dem der Erfassungsschritt umfasst ein Empfangen eines Signals, das über wenigstens einen Vorgang aktiviert wird, der manuell über einen Bediener an dem Querstück (6) oder dem Fixierelement (8, 8') durchgeführt wird, das auf Basis der ersten Anweisung positioniert wurde.

4. Verfahren gemäß Anspruch 3, bei dem der manuell durchgeführte Vorgang ein Festlegen des Querstückes (6) oder des Fixierelements (8, 8') in Position umfasst, wobei das über einen Sensor an die Steuereinheit (12) in Reaktion auf das Festlegen in Position gesendete Signal betrieblich mit dem Querstück oder mit dem Fixierelement assoziiert ist.

5. Verfahren gemäß einem der vorstehenden Ansprüche, bei dem der Schritt eines Zuführens einer ersten Sprachanweisung und/oder der Schritt eines Zuführens einer zweiten Sprachanweisung mit einem Schritt eines Aktivierens eines Anzeigemittels (15) assoziiert ist, das geeignet ist, um dem Bediener das zu positionierende Element anzuzeigen.

6. Verfahren gemäß Anspruch 5, bei dem das Anzeigemittel eine Lichtquelle (15) umfasst, die an dem zu positionierenden Element tätig wird.

7. Verfahren gemäß Anspruch 6, bei dem die Lichtquelle das zu positionierende Element mit einem Lichtstrahl trift und/oder bei dem die Lichtquelle an dem zu positionierenden Element angeordnet ist.

8. Verfahren gemäß einem der vorstehenden Ansprüche, bei dem die erste Sprachanweisung oder die zweite Sprachanweisung wenigstens einen koordinierten numerischen Wert zum Positionieren eines Querstücks (6) oder eines Fixierelements (8, 8') umfasst.

9. Verfahren gemäß einem der vorstehenden Ansprüche, bei dem das eine oder mehrere Fixierelement (8, 8') zum Fixieren des Werkstücks als ein Saug-artiger Typ vorgesehen sind und wobei die Sprach-Nutzerschnittstelle den Nutzer auffordert, die Saugmittel von dem einen oder mehreren Fixierelementen zu aktivieren, nachdem alle gewünschten Positionierungen vervollständigt worden sind.

10. Vorrichtung, insbesondere zum Implementieren des Verfahrens gemäß einem der vorstehenden Ansprüche, umfassend:
- eine Lagerungsebene (3) eines Werkstücks (1), das aus Holz oder einem holzähnlichen Material hergestellt ist, wobei die Lagerungsebene (3) sich in einer Längsrichtung (X) erstreckt, wobei die Lagerungsebene ein oder mehrere Querstücke (6) aufweist, wobei jedes Querstück sich in einer querverlaufenden Richtung (Y) erstreckt, die zu der Längsrichtung (X) querverläuft, wobei jedes Querstück (6) in der Lagerungsebene (3) entlang der Längsrichtung (X) positionierbar ist, wobei jedes Querstück ein oder mehreren Fixierelemente (8, 8') zum Fixieren des Werkstücks umfasst, wobei jedes Fixierelement an dem Querstück entlang der quer verlaufenden Richtung (Y) positionierbar ist;
- wenigstens eine Betriebseinheit (4), die oberhalb der Lagerungsebene tätig ist und mit einem oder mehreren Werkzeugen zum Durchführen eines Bearbeiten des Werkstückes versehen ist;
- eine Sprach-Nutzerschnittstelle;
- eine programmierbare Steuereinheit (12), die mit der Sprach-Nutzerschnittstelle verbunden ist;
- ein Medium, das über einen Computer lesbar ist und Programmanweisungen aufweist, die über die Steuereinheit (12) ausführbar sind, wobei die Programmanweisungen den Schritt umfassen, von:
Empfangen von Daten in einem mit der Steuereinheit verbundenen Speicher, umfassend ein oder mehrere X-Daten, die mit der gewünschten Positionierung des einen oder der mehreren Querstücke entlang der Längsrichtung (X) assoziiert sind, und ein oder mehrere Y-Daten, die mit der gewünschten Positionierung von dem einen oder der mehreren Fixierelementen entlang der querverlaufenden Richtung (Y) assoziiert sind;
Aktualisieren der Einstellungen der Vorrichtung auf Basis von dem einen oder den mehreren X-Daten und dem einen oder mehreren Y-Daten;
Zuführen einer ersten Sprachanweisung, um einem Bediener zu helfen, eine erste gewünschte Positionierung von einem von dem einen oder mehreren Querstücken entlang der Längsrichtung (X) oder von einem der einen oder mehreren Fixierelementen entlang der querverlaufenden Richtung (Y) durchzuführen, wobei die erste Anweisung mit einem ersten Bezugswert von den einen oder mehreren X-Daten und den einen oder mehreren Y-Daten assoziiert ist, wobei der Schritt eines Zuführen einer ersten Anweisung wenigstens einen Vorgang umfasst, der über die Sprach-Nutzerschnittstelle durchgeführt wird;
Erfassen, dass der Bediener die erste gewünschte Positionierung vervollständigt hat;
Zuführen einer zweiten Sprachanweisung nachdem die erste gewünschte Positionierung vervollständigt ist, um dem Bediener dabei zu helfen, eine zweite gewünschte Positionierung von einem der einen oder mehreren Querstücken entlang der Längsrichtung (X) oder von einem von den einen oder mehreren Fixiermittel entlang der querverlaufenden Richtung (Y) durchzuführen, wobei die zweite Anweisung mit einem zweiten Bezugswert von den einen oder mehreren X-Daten oder einen oder mehreren Y-Daten assoziiert ist.

11. Medium, das über einen Computer lesbar ist und Programmanweisungen umfasst, die über einen Prozessor ausführbar sind, zum Implementieren eines Verfahren zum Fördern des Startens einer Vorrichtung zum Bearbeiten eines Werkstücks, das aus Holz oder holzähnlichem Material hergestellt ist, wobei die Programmanweisungen die Schritte des Verfahrens gemäß einem der Ansprüche 1 bis 9 umfassen.

12. Computerprogramm, umfassend Anweisungen zum Implementieren eines Verfahrens zum Fördern des Startens einer Vorrichtung zum Bearbeiten eines Werkstücks, das aus Holz oder holzähnlichen Materialien hergestellt ist, wobei die Programmanweisungen die Schritte des Verfahrens gemäß einem der Ansprüche 1 bis 9 umfassen.

## Revendications

1. Procédé destiné à faciliter le démarrage d'un appareil (2) pour l'usinage d'une pièce à usiner (1) constituée de bois ou d'un matériau semblable au bois, ledit appareil comportant un plan de support (3) pour soutenir la pièce à usiner, ledit plan de support s'étendant dans une direction longitudinale (X), ledit plan de support (3) comportant une ou plusieurs pièces transversales (6), chaque pièce transversale s'étendant dans une direction transversale (Y) qui est transversale par rapport à ladite direction longitudinale (X), chaque pièce transversale (6) pouvant être positionnée dans ledit plan de support le long de ladite direction longitudinale (X), chaque pièce transversale (6) comportant un ou plusieurs éléments de fixation (8, 8') pour immobiliser la pièce à usiner, chaque élément de fixation pouvant être positionné dans ladite pièce transversale (6) le long de ladite direction transversale (Y), ledit appareil comprenant une unité de commande programmable (12) connectée à une interface d'utilisateur vocale ; ledit procédé comprenant les étapes qui consistent à :
- recevoir, dans une mémoire connectée à ladite unité de commande (12), des données comprenant une ou plusieurs données X associées au positionnement souhaité desdites une ou plusieurs pièces transversales (6) le long de ladite direction longitudinale (X) et une ou plusieurs données Y associées au positionnement souhaité desdits un ou plusieurs éléments de fixation (8, 8') le long de ladite direction transversale (Y) ;
- mettre à jour les réglages dudit appareil sur la base desdites une ou plusieurs données X et desdites une ou plusieurs données Y ;
- fournir une première instruction vocale pour assister un opérateur dans la réalisation d'un premier positionnement souhaité de l'une desdites une ou plusieurs pièces transversales (6) le long de ladite direction longitudinale (X) ou de l'un desdits un ou plusieurs éléments de fixation (8, 8') le long de ladite direction transversale (Y), ladite première instruction vocale étant associée à une première donnée desdites une ou plusieurs données X et desdites une ou plusieurs données Y, ladite étape de fourniture d'une première instruction vocale comprenant au moins une opération réalisée par ladite interface d'utilisateur vocale ;
- détecter que l'opérateur a terminé ledit premier positionnement souhaité ;
- après l'achèvement dudit premier positionnement souhaité, fournir une deuxième instruction vocale pour assister l'opérateur dans la réalisation d'un deuxième positionnement souhaité de l'une desdites une ou plusieurs pièces transversales (6) le long de ladite direction longitudinale (X) ou de l'un desdits un ou plusieurs éléments de fixation (8, 8') le long de ladite direction transversale (Y), ladite deuxième instruction vocale étant associée à une deuxième donnée desdites une ou plusieurs données X et desdites une ou plusieurs données Y, ladite étape de fourniture d'une deuxième instruction vocale comprenant au moins une opération réalisée par ladite interface d'utilisateur vocale.

2. Procédé selon la revendication 1, dans lequel ladite étape de détection comprend la réception d'une commande vocale de réglage envoyée par l'opérateur par l'intermédiaire de ladite interface d'utilisateur vocale, ladite unité de commande (12) étant programmée pour fournir ladite deuxième instruction en réponse à la réception de ladite commande vocale.

3. Procédé selon la revendication 1 ou 2, dans lequel ladite étape de détection comprend la réception d'un signal activé par au moins une opération effectuée manuellement par un opérateur sur la pièce transversale (6) ou l'élément de fixation (8, 8') positionné(e) sur la base de ladite première instruction.

4. Procédé selon la revendication 3, dans lequel ladite opération effectuée manuellement comprend le verrouillage en position de ladite pièce transversale (6) ou dudit élément de fixation (8, 8'), ledit signal étant, en réponse audit verrouillage en position, envoyé à ladite unité de commande (12) par un capteur associé de manière fonctionnelle à ladite pièce transversale ou audit élément de fixation.

5. Procédé selon une quelconque revendication précédente, dans lequel ladite étape de fourniture d'une première instruction vocale et/ou ladite étape de fourniture d'une deuxième instruction vocale est/sont associée(s) à une étape d'activation de moyens d'indication (15) qui sont aptes à indiquer à l'opérateur l'élément devant être positionné.

6. Procédé selon la revendication 5, dans lequel lesdits moyens d'indication comprennent une source de lumière (15) qui fonctionne sur l'élément devant être positionné.

7. Procédé selon la revendication 6, dans lequel ladite source de lumière frappe l'élément devant être positionné avec un faisceau de lumière et/ou dans lequel ladite source de lumière est disposée sur l'élément devant être positionné.

8. Procédé selon une quelconque revendication précédente, dans lequel ladite première instruction vocale ou ladite deuxième instruction vocale comprend au moins une valeur numérique de coordonnée destinée à positionner une pièce transversale (6) ou un élément de fixation (8, 8').

9. Procédé selon une quelconque revendication précédente, dans lequel lesdits un ou plusieurs éléments de fixation (8, 8') pour immobiliser la pièce à usiner sont du type à succion et dans lequel ladite interface d'utilisateur vocale invite l'utilisateur à activer les moyens de succion desdits un ou plusieurs éléments de fixation après achèvement de tous les positionnements souhaités.

10. Appareil, destiné plus particulièrement à la mise en oeuvre du procédé selon une quelconque revendication précédente, comprenant :
- un plan de support (3) d'une pièce à usiner (1) constituée de bois ou d'un matériau semblable au bois, ledit plan de support (3) s'étendant dans une direction longitudinale (X), ledit plan de support comportant une ou plusieurs pièces transversales (6), chaque pièce transversale s'étendant dans une direction transversale (Y) qui est transversale par rapport à ladite direction longitudinale (X), chaque pièce transversale (6) pouvant être positionnée dans ledit plan de support (3) le long de ladite direction longitudinale (X), chaque pièce transversale comportant un ou plusieurs éléments de fixation (8, 8') immobilisant la pièce à usiner, chaque élément de fixation pouvant être positionné dans ladite pièce transversale le long de ladite direction transversale (Y) ;
- au moins une unité fonctionnelle (4) fonctionnant au-dessus dudit plan de support et équipée d'un ou de plusieurs outils pour réaliser des usinages sur la pièce à usiner ;
- une interface d'utilisateur vocale ;
- une unité de commande programmable (12) connectée à ladite interface d'utilisateur vocale ;
- un support qui peut être lu par un ordinateur et qui comporte des instructions de programme pouvant être exécutées par ladite unité de commande (12), lesdites instructions de programme comprenant les étapes qui consistent à :
recevoir, dans une mémoire connectée à ladite unité de commande, des données comprenant une ou plusieurs données X associées au positionnement souhaité desdites une ou plusieurs pièces transversales le long de ladite direction longitudinale (X) et une ou plusieurs données Y associées au positionnement souhaité desdits un ou plusieurs éléments de fixation le long de ladite direction transversale (Y) ;
mettre à jour les réglages dudit appareil sur la base desdites une ou plusieurs données X et desdites une ou plusieurs données Y ;
fournir une première instruction vocale pour assister un opérateur dans la réalisation d'un premier positionnement souhaité de l'une desdites une ou plusieurs pièces transversales le long de ladite direction longitudinale (X) ou de l'un desdits un ou plusieurs éléments de fixation le long de ladite direction transversale (Y), ladite première instruction étant associée à une première donnée desdites une ou plusieurs données X et desdites une ou plusieurs données Y, ladite étape de fourniture d'une première instruction comprenant au moins une opération réalisée par ladite interface d'utilisateur vocale ;
détecter que l'opérateur a terminé ledit premier positionnement souhaité ;
après l'achèvement dudit premier positionnement souhaité, fournir une deuxième instruction vocale pour assister l'opérateur dans la réalisation d'un deuxième positionnement souhaité de l'une desdites une ou plusieurs pièces transversales le long de ladite direction longitudinale (X) ou de l'un desdits un ou plusieurs éléments de fixation le long de ladite direction transversale (Y), ladite deuxième instruction étant associée à une deuxième donnée desdites une ou plusieurs données X et desdites une ou plusieurs données Y.

11. Support qui peut être lu par un ordinateur et qui contient des instructions de programme pouvant être exécutées par un processeur pour la mise en oeuvre d'un procédé destiné à faciliter le démarrage d'un appareil pour l'usinage d'une pièce à usiner constituée de bois ou d'un matériau semblable au bois, lesdites instructions de programme comprenant les étapes du procédé selon l'une quelconque des revendications 1 à 9.

12. Programme d'ordinateur comprenant des instructions pour la mise en oeuvre d'un procédé destiné à faciliter le démarrage d'un appareil pour l'usinage d'une pièce à usiner constituée de bois ou d'un matériau semblable au bois, lesdites instructions de programme comprenant les étapes du procédé selon l'une quelconque des revendications 1 à 9.
